(19)

Europäisches
Patentamt
European
Patent Office
Office européen
des brevets

(11) **EP 3 079 265 A1**

(12) **EUROPEAN PATENT APPLICATION**
published in accordance with Art. 153(4) EPC

(43) Date of publication:
**12.10.2016 Bulletin 2016/41**

(21) Application number: **13900390.9**

(22) Date of filing: **27.12.2013**

(51) Int Cl.:
**H04B 7/04** (2006.01)

(86) International application number:
**PCT/CN2013/090726**

(87) International publication number:
**WO 2015/096143 (02.07.2015 Gazette 2015/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Huawei Technologies Co., Ltd.
Longgang District
Shenzhen, Guangdong 518129 (CN)**

(72) Inventors:
• **LIU, Kunpeng
Shenzhen
Guangdong 518129 (CN)**
• **LIU, Jianghua
Shenzhen
Guangdong 518129 (CN)**

(74) Representative: **Körber, Martin Hans
Mitscherlich PartmbB
Patent- und Rechtsanwälte
Sonnenstrasse 33
80331 München (DE)**

(54) **TRANSMISSION METHOD AND DEVICE FOR TRANSMITTING CHANNEL STATE INFORMATION**

(57) The present invention discloses a method and a device for transmitting channel state information, where the method includes: determining, by a first network device according to measurement of a reference signal sent by a second network device, channel state information including a precoding matrix indication PMI and selection information that is used to instruct to select a matrix element in a precoding matrix indicated by the PMI; and sending the channel state information to the second network device. Because the channel state information includes the precoding matrix indication PMI used to instruct the second network device to perform precoding and the selection information that is used to instruct to select a matrix element in a precoding matrix indicated by the PMI, the second network device can determine, according to the selection information for the matrix element, a precoding matrix for performing precoding, and synthesize a channel precoding matrix applicable to a two-dimensional antenna. Therefore, dimensions of the synthesized precoding matrix are closer to a spatial feature of a real channel, which effectively improves precision of a precoding matrix.

```
                                          101
┌─────────────────────────────────────────────────────┐
│  A first network device determines channel state      │
│  information according to measurement of a reference   │
│  signal sent by a second network device               │
└─────────────────────────────────────────────────────┘
                         │
                         ▼            102
┌─────────────────────────────────────────────────────┐
│  Send the channel state information to the second      │
│  network device                                        │
└─────────────────────────────────────────────────────┘
```

FIG. 1

## Description

### TECHNICAL FIELD

The present invention relates to the field of wireless communications technologies, and in particular, to a method and a device for transmitting channel state information.

### BACKGROUND

To further improve a total throughput rate and an average throughput rate for cell users, an advanced wireless interface technology of the 4G (The Fourth Generation, the fourth generation) mobile communications system is specially researched. A 3D multi-antenna technology such as a dynamic three-dimensional beamforming technology is a key technology to improve a throughput rate for cell-edge users and a total throughput rate and an average throughput rate of cell users, and receives much attention of the industry.

In a cellular system, antenna arrays of a base station are generally arranged horizontally and linearly. A transmit end of a base station can adjust a beam only in a horizontal dimension, and a beam for each user has a fixed downtilt in a vertical dimension. Therefore, various beamforming/precoding technologies and the like are implemented based on channel information in the horizontal dimension. In fact, because a radio signal propagates in a three-dimensional manner in space, a method in which a downtilt is fixed cannot optimize system performance. Beam adjustment in the vertical dimension is highly significant for improvement of the system performance.

With development of antenna technologies, an active antenna that can independently control each array element has already emerged in the industry. An active antenna array makes it possible to dynamically adjust a beam in the vertical dimension. Generally, implementing three-dimensional beamforming/precoding needs to depend on channel state information reported by user equipment.

Specifically, the user equipment separately determines channel state information of an active antenna array in the horizontal dimension and channel state information of the active antenna array in the vertical dimension by measuring different reference signals, and reports the channel state information in the horizontal dimension and the channel state information in the vertical dimension to a base station, so that the base station determines channel state information of the entire antenna array according to the received channel state information in the horizontal dimension and the received channel state information in the vertical dimension.

When the user equipment measures channel state information in different dimensions, for each dimension, only channel state information in the dimension is considered in measurement, and channel state information in other dimensions is not comprehensively considered. Consequently, a rank or a dimension of a precoding matrix, of an entire antenna array, obtained by synthesizing precoding matrices in the channel state information in the horizontal dimension and the channel state information in the vertical dimension that are reported separately and independently differs greatly from a rank obtained by measuring a real channel of the entire antenna array, and the synthesized precoding matrix is inaccurate.

### SUMMARY

Embodiments of the present invention provide a method and a device for transmitting channel state information, which are used to resolve a problem of relatively low precision of a currently determined precoding matrix because a codebook dimension of the precoding matrix is inaccurate.

According to a first aspect of the present invention, a method for transmitting channel state information is provided, including:

determining, by a first network device, channel state information according to measurement of a reference signal sent by a second network device, where the channel state information includes a precoding matrix indication PMI and selection information that is used to instruct to select a matrix element in a precoding matrix indicated by the PMI; and

sending the channel state information to the second network device.

With reference to an implementation manner of the first aspect of the present invention, in a first possible implementation manner,

for a double codebook structure, the precoding matrix indicated by the PMI is obtained by synthesizing precoding matrices that are respectively indicated by two sub-PMIs.

With reference to the implementation manner of the first aspect of the present invention, in a second possible implementation manner, the channel state information includes information about at least two PMIs.

With reference to the implementation manner of the first aspect of the present invention or the second possible implementation manner of the first aspect of the present invention, in a third possible implementation manner, the channel state information includes selection information for selecting matrix elements in precoding matrices indicated by the at least two PMIs.

With reference to the second possible implementation manner of the first aspect of the present invention, in a fourth possible implementation manner, the information about the at least two PMIs is obtained by means of measurement according to configuration information of different reference signals.

With reference to the second possible implementation manner of the first aspect of the present invention, in a fifth possible implementation manner, the information about the at least two PMIs is obtained by means of measurement according to configuration information of different channel state information processes CSI process.

With reference to the implementation manner of the first aspect of the present invention, the second possible implementation manner of the first aspect of the present invention, the third possible implementation manner of the first aspect of the present invention, the fourth possible implementation manner of the first aspect of the present invention, or the fifth possible implementation manner of the first aspect of the present invention, in a sixth possible implementation manner, the selection information that is used to instruct to select a matrix element in a precoding matrix indicated by the PMI includes: column selection information and row selection information.

With reference to the implementation manner of the first aspect of the present invention, the second possible implementation manner of the first aspect of the present invention, the third possible implementation manner of the first aspect of the present invention, the fourth possible implementation manner of the first aspect of the present invention, the fifth possible implementation manner of the first aspect of the present invention, or the sixth possible implementation manner of the first aspect of the present invention, in a seventh possible implementation manner, when the channel state information includes at least two PMIs, a product of column quantities that are used to instruct to perform column selection on matrix elements in precoding matrices that are respectively indicated by the at least two PMIs is not greater than a first numerical value.

With reference to the implementation manner of the first aspect of the present invention, the second possible implementation manner of the first aspect of the present invention, the third possible implementation manner of the first aspect of the present invention, the fourth possible implementation manner of the first aspect of the present invention, the fifth possible implementation manner of the first aspect of the present invention, or the sixth possible implementation manner of the first aspect of the present invention, in an eighth possible implementation manner, when the channel state information includes at least two PMIs, a product of column quantities that are used to instruct to perform column selection on matrix elements in precoding matrices that are respectively indicated by the at least two PMIs is not less than a first numerical value.

With reference to the seventh possible implementation manner of the first aspect of the present invention or the eighth possible implementation manner of the first aspect of the present invention, in a ninth possible implementation manner, the first numerical value is a first rank indication RI reported by the first network device; or the first numerical value is a first RI configured by the second network device.

With reference to the seventh possible implementation manner of the first aspect of the present invention or the eighth possible implementation manner of the first aspect of the present invention, in a tenth possible implementation manner, the first numerical value is a smaller one of a quantity of receive antennas of the first network device and a quantity of transmit antennas of the second network device.

With reference to the implementation manner of the first aspect of the present invention, the second possible implementation manner of the first aspect of the present invention, the third possible implementation manner of the first aspect of the present invention, the fourth possible implementation manner of the first aspect of the present invention, the fifth possible implementation manner of the first aspect of the present invention, or the sixth possible implementation manner of the first aspect of the present invention, in an eleventh possible implementation manner, when the channel state information includes at least two PMIs, a column quantity that is used to instruct to perform column selection on a matrix element in a precoding matrix indicated by each PMI is not greater than a second numerical value.

With reference to the implementation manner of the first aspect of the present invention, the second possible implementation manner of the first aspect of the present invention, the third possible implementation manner of the first aspect of the present invention, the fourth possible implementation manner of the first aspect of the present invention, the fifth possible implementation manner of the first aspect of the present invention, or the sixth possible implementation manner of the first aspect of the present invention, in a twelfth possible implementation manner, when the channel state information includes at least two PMIs, a column quantity that is used to instruct to perform column selection on a matrix element in a precoding matrix indicated by each PMI is not less than a second numerical value.

With reference to the eleventh possible implementation manner of the first aspect of the present invention or the twelfth possible implementation manner of the first aspect of the present invention, in a thirteenth possible implementation manner, the second numerical value is a second rank indication RI reported by the first network device; or the second numerical value is a second RI configured by the second network device.

With reference to the eleventh possible implementation manner of the first aspect of the present invention or the twelfth possible implementation manner of the first aspect of the present invention, in a fourteenth possible implementation manner, the second numerical value is a smaller one of a quantity of receive antennas of the first network device and a quantity of transmit antennas of the second network device.

With reference to the eleventh possible implementation manner of the first aspect of the present invention, the twelfth possible implementation manner of the first aspect of the present invention, the thirteenth possible implementation manner of the first aspect of the present invention, or the fourteenth possible implementation manner of the first aspect of the present invention, in a fifteenth possible implementation manner, for precoding matrices indicated by different PMIs, the first network device separately determines a third numerical value for performing column selection on a matrix element in each of the precoding matrices.

With reference to the fifteenth possible implementation manner of the first aspect of the present invention, in a sixteenth possible implementation manner, the third numerical value is a third rank indication RI reported by the first network device; or the third numerical value is a third RI configured by the second network device.

With reference to the implementation manner of the first aspect of the present invention, the second possible implementation manner of the first aspect of the present invention, the third possible implementation manner of the first aspect of the present invention, the fourth possible implementation manner of the first aspect of the present invention, the fifth possible implementation manner of the first aspect of the present invention, the sixth possible implementation manner of the first aspect of the present invention, the seventh possible implementation manner of the first aspect of the present invention, the eighth possible implementation manner of the first aspect of the present invention, the ninth possible implementation manner of the first aspect of the present invention, the tenth possible implementation manner of the first aspect of the present invention, the eleventh possible implementation manner of the first aspect of the present invention, the twelfth possible implementation manner of the first aspect of the present invention, the thirteenth possible implementation manner of the first aspect of the present invention, the fourteenth possible implementation manner of the first aspect of the present invention, the fifteenth possible implementation manner of the first aspect of the present invention, or the sixteenth possible implementation manner of the first aspect of the present invention, in a seventeenth possible implementation manner, the column selection information is in a bitmap signaling format.

With reference to the implementation manner of the first aspect of the present invention, the second possible implementation manner of the first aspect of the present invention, the third possible implementation manner of the first aspect of the present invention, the fourth possible implementation manner of the first aspect of the present invention, the fifth possible implementation manner of the first aspect of the present invention, the sixth possible implementation manner of the first aspect of the present invention, the seventh possible implementation manner of the first aspect of the present invention, the eighth possible implementation manner of the first aspect of the present invention, the ninth possible implementation manner of the first aspect of the present invention, the tenth possible implementation manner of the first aspect of the present invention, the eleventh possible implementation manner of the first aspect of the present invention, the twelfth possible implementation manner of the first aspect of the present invention, the thirteenth possible implementation manner of the first aspect of the present invention, the fourteenth possible implementation manner of the first aspect of the present invention, the fifteenth possible implementation manner of the first aspect of the present invention, the sixteenth possible implementation manner of the first aspect of the present invention, or the seventeenth possible implementation manner of the first aspect of the present invention, in an eighteenth possible implementation manner, an independent coding manner or a joint coding manner is used for the selection information for performing column selection on the precoding matrices indicated by the at least two PMIs.

With reference to the implementation manner of the first aspect of the present invention, in a nineteenth possible implementation manner, the channel state information further includes channel quality indicator CQI information, where the CQI information includes a first CQI calculated according to a precoding matrix indicated by each PMI, and/or a second CQI obtained according to a precoding matrix after column selection is performed on the/a precoding matrix indicated by each PMI.

With reference to the implementation manner of the first aspect of the present invention, in a twentieth possible implementation manner, the channel state information further includes channel quality indicator CQI information, where the CQI information includes a third CQI calculated according to a precoding matrix obtained by performing a Kronecker product on precoding matrices indicated by the at least two PMIs, and/or a fourth CQI calculated according to a precoding matrix obtained by performing a Kronecker product on a precoding matrix after column selection is performed on precoding matrices indicated by the at least two PMIs.

With reference to the nineteenth possible implementation manner of the first aspect of the present invention or the twentieth possible implementation manner of the first aspect of the present invention, in a twenty-first possible implementation manner, the channel state information sent by the first network device further includes the first CQI; or the first CQI and the third CQI; or

a differential value obtained according to the third CQI and at least one first CQI; or

the first CQI and the second CQI; or

a differential value obtained according to the second CQI and at least one first CQI; or

the first CQI and the fourth CQI; or

a differential value obtained according to the fourth CQI and at least one first CQI; or

the second CQI and the fourth CQI; or

the second CQI and a differential value obtained according to the fourth CQI and the second CQI value;

the second CQI and the third CQI; or

the second CQI and a differential value obtained according to the third CQI and the second CQI value; or

the third CQI and the fourth CQI; or

the third CQI and a differential value obtained according to the fourth CQI and the third CQI value.

With reference to the implementation manner of the first aspect of the present invention, in a twenty-second possible implementation manner, the first network device is a terminal device, and the second network device is a base station device; or

the first network device is a terminal device, and the second network device is a terminal device; or

the first network device is a base station device, and the second network device is a base station device.

According to a second aspect of the present invention, a method for transmitting channel state information is provided, including:

receiving, by a second network device, channel state information sent by a first network device, where the channel state information includes a precoding matrix indication PMI and selection information that is used to select a matrix element in a precoding matrix indicated by the PMI; and

obtaining, according to the channel state information, a precoding matrix used to communicate with the first network device.

With reference to the implementation manner of the second aspect of the present invention, in a first possible implementation manner, the obtaining, according to the channel state information, a precoding matrix used to communicate with the first network device includes:

selecting, by the second network device according to the selection information, a matrix element in the precoding matrix indicated by the PMI, and generating, by using the selected matrix element, a precoding matrix used to communicate with the first network device.

With reference to the implementation manner of the second aspect of the present invention, in a second possible implementation manner,

for a double codebook structure, the precoding matrix indicated by the PMI is obtained by synthesizing precoding matrices that are respectively indicated by two sub-PMIs.

With reference to the implementation manner of the second aspect of the present invention, in a third possible implementation manner, the channel state information includes information about at least two PMIs.

With reference to the implementation manner of the second aspect of the present invention or the third possible implementation manner of the second aspect of the present invention, in a fourth possible implementation manner, the channel state information includes selection information for selecting matrix elements in precoding matrices indicated by the at least two PMIs.

With reference to the third possible implementation manner of the second aspect of the present invention, in a fifth possible implementation manner, the information about the at least two PMIs is obtained by means of measurement according to configuration information of different reference signals.

With reference to the third possible implementation manner of the second aspect of the present invention, in a sixth possible implementation manner, the information about the at least two PMIs is obtained by means of measurement according to configuration information of different channel state information processes CSI process.

With reference to the implementation manner of the second aspect of the present invention, the first possible implementation manner of the second aspect of the present invention, the second possible implementation manner of the second aspect of the present invention, the third possible implementation manner of the second aspect of the present invention, or the fourth possible implementation manner of the second aspect of the present invention, in a seventh possible implementation manner, the selection information that is used to instruct to select a matrix element in a precoding matrix indicated by the PMI includes: column selection information and row selection information.

With reference to the implementation manner of the second aspect of the present invention, the first possible implementation manner of the second aspect of the present invention, the second possible implementation manner of the second aspect of the present invention, the third possible implementation manner of the second aspect of the present invention, the fourth possible implementation manner of the second aspect of the present invention, the fifth possible implementation manner of the second aspect of the present invention, the sixth possible implementation manner of the second aspect of the present invention, or the seventh possible implementation manner of the second aspect of the present invention, in an eighth possible implementation manner, when the channel state information includes at least two PMIs, a product of column quantities that are used to instruct to perform column selection on matrix elements in precoding matrices that are respectively indicated by the at least two PMIs is not greater than a first numerical value.

With reference to the implementation manner of the second aspect of the present invention, the first possible implementation manner of the second aspect of the present invention, the second possible implementation manner of the second aspect of the present invention, the third possible implementation manner of the second aspect of the present invention, the fourth possible implementation manner of the second aspect of the present invention, the fifth possible implementation manner of the second aspect of the present invention, the sixth possible implementation manner of the second aspect of the present invention, or the seventh possible implementation manner of the second aspect of the present invention, in a ninth possible implementation manner, when the channel state information includes at least two PMIs, a product of column quantities that are used to instruct to perform column selection on matrix elements in precoding matrices that are respectively indicated by the at least two PMIs is not less than a first numerical value.

With reference to the eighth possible implementation manner of the second aspect of the present invention or the ninth possible implementation manner of the second aspect of the present invention, in a tenth possible implementation manner, the first numerical value is a first rank indication RI reported by the first network device; or the first numerical value is a first RI configured by the second network device.

With reference to the eighth possible implementation manner of the second aspect of the present invention or the ninth possible implementation manner of the second aspect of the present invention, in an eleventh possible implementation manner, the first numerical value is a smaller one of a quantity of receive antennas of the first network device and a quantity of transmit antennas of the second network device.

With reference to the implementation manner of the second aspect of the present invention, the first possible implementation manner of the second aspect of the present invention, the second possible implementation manner of the second aspect of the present invention, the third possible implementation manner of the second aspect of the present invention, the fourth possible implementation manner of the second aspect of the present invention, the fifth possible implementation manner of the second aspect of the present invention, the sixth possible implementation manner of the second aspect of the present invention, or the seventh possible implementation manner of the second aspect of the present invention, in a twelfth possible implementation manner, when the channel state information includes at least two PMIs, a column quantity that is used to instruct to perform column selection on a matrix element in a precoding matrix indicated by each PMI is not greater than a second numerical value.

With reference to the implementation manner of the second aspect of the present invention, the first possible implementation manner of the second aspect of the present invention, the second possible implementation manner of the second aspect of the present invention, the third possible implementation manner of the second aspect of the present invention, the fourth possible implementation manner of the second aspect of the present invention, the fifth possible implementation manner of the second aspect of the present invention, the sixth possible implementation manner of the second aspect of the present invention, or the seventh possible implementation manner of the second aspect of the present invention, in a thirteenth possible implementation manner, when the channel state information includes at least two PMIs, a column quantity that is used to instruct to perform column selection on a matrix element in a precoding matrix indicated by each PMI is not less than a second numerical value.

With reference to the twelfth possible implementation manner of the second aspect of the present invention or the thirteenth possible implementation manner of the second aspect of the present invention, in a fourteenth possible implementation manner, the second numerical value is a second rank indication RI reported by the first network device; or the second numerical value is a second RI configured by the second network device.

With reference to the twelfth possible implementation manner of the second aspect of the present invention or the thirteenth possible implementation manner of the second aspect of the present invention, in a fifteenth possible implementation manner, the second numerical value is a smaller one of a quantity of receive antennas of the first network device and a quantity of transmit antennas of the second network device.

With reference to the twelfth possible implementation manner of the second aspect of the present invention, the thirteenth possible implementation manner of the second aspect of the present invention, the fourteenth possible implementation manner of the second aspect of the present invention, or the fifteenth possible implementation manner of the second aspect of the present invention, in a sixteenth possible implementation manner, for precoding matrices indicated by different PMIs, the first network device separately determines a third numerical value for performing column selection on a matrix element in each of the precoding matrices.

With reference to the sixteenth possible implementation manner of the second aspect of the present invention, in a seventeenth possible implementation manner, the third numerical value is a third rank indication RI reported by the first network device; or the third numerical value is a third RI configured by the second network device.

With reference to the implementation manner of the second aspect of the present invention, the first possible implementation manner of the second aspect of the present invention, the second possible implementation manner of the second aspect of the present invention, the third possible implementation manner of the second aspect of the present invention, the fourth possible implementation manner of the second aspect of the present invention, the fifth possible implementation manner of the second aspect of the present invention, the sixth possible implementation manner of the second aspect of the present invention, the seventh possible implementation manner of the second aspect of the present invention, the eighth possible implementation manner of the second aspect of the present invention, the ninth possible implementation manner of the second aspect of the present invention, the tenth possible implementation manner of the second aspect of the present invention, the eleventh possible implementation manner of the second aspect of the present invention" the twelfth possible implementation manner of the second aspect of the present invention, the thirteenth possible implementation manner of the second aspect of the present invention, the fourteenth possible implementation manner of the second aspect of the present invention, the fifteenth possible implementation manner of the second aspect of the present invention, the sixteenth possible implementation manner of the second aspect of the present invention, or the seventeenth possible implementation manner of the second aspect of the present invention, in an eighteenth possible implementation manner, the column selection information is in a bitmap signaling format.

With reference to the implementation manner of the second aspect of the present invention, the first possible implementation manner of the second aspect of the present invention, the second possible implementation manner of the second aspect of the present invention, the third possible implementation manner of the second aspect of the present invention, the fourth possible implementation manner of the second aspect of the present invention, the fifth possible implementation manner of the second aspect of the present invention, the sixth possible implementation manner of the second aspect of the present invention, the seventh possible implementation manner of the second aspect of the present invention, the eighth possible implementation manner of the second aspect of the present invention, the ninth possible implementation manner of the second aspect of the present invention, the tenth possible implementation manner of the second aspect of the present invention, the eleventh possible implementation manner of the second aspect of the present invention, the twelfth possible implementation manner of the second aspect of the present invention, the thirteenth possible implementation manner of the second aspect of the present invention, the fourteenth possible implementation manner of the second aspect of the present invention, the fifteenth possible implementation manner of the second aspect of the present invention, the sixteenth possible implementation manner of the second aspect of the present invention, or the seventeenth possible implementation manner of the second aspect of the present invention, or the eighteenth possible implementation manner of the second aspect of the present invention, in a nineteenth possible implementation manner, an independent coding manner or a joint coding manner is used for the selection information for performing column selection on the precoding matrices indicated by the at least two PMIs.

With reference to the implementation manner of the second aspect of the present invention, in a twentieth possible implementation manner, the channel state information further includes channel quality indicator CQI information, where the CQI information includes a first CQI calculated according to a precoding matrix indicated by each PMI, and/or a second CQI obtained according to a precoding matrix after column selection is performed on the/a precoding matrix indicated by each PMI.

With reference to the implementation manner of the second aspect of the present invention, in a twenty-first possible implementation manner, the channel state information further includes channel quality indicator CQI information, where the CQI information includes a third CQI calculated according to a precoding matrix obtained by performing a Kronecker product on precoding matrices indicated by the at least two PMIs, and/or a fourth CQI calculated according to a precoding matrix obtained by performing a Kronecker product on a precoding matrix after column selection is performed on precoding matrices indicated by the at least two PMIs.

With reference to the twentieth possible implementation manner of the second aspect of the present invention or the twenty-first possible implementation manner of the second aspect of the present invention, in a twenty-second possible implementation manner, the channel state information received by the second network device further includes the first CQI; or
the first CQI and the third CQI; or
a differential value obtained according to the third CQI and at least one first CQI; or
the first CQI and the second CQI; or
a differential value obtained according to the second CQI and at least one first CQI; or
the first CQI and the fourth CQI; or
a differential value obtained according to the fourth CQI and at least one first CQI; or the second CQI and the fourth CQI; or
the second CQI and a differential value obtained according to the fourth CQI and the second CQI value;
the second CQI and the third CQI; or
the second CQI and a differential value obtained according to the third CQI and the second CQI value; or
the third CQI and the fourth CQI; or
the third CQI and a differential value obtained according to the fourth CQI and the third CQI value.

According to a third aspect, a device for transmitting channel state information is provided, including:

a determining module, configured to determine channel state information according to measurement of a reference signal sent by a second network device, where the channel state information includes a precoding matrix indication PMI and selection information that is used to instruct to select a matrix element in a precoding matrix indicated by the PMI; and

a sending module, configured to send the channel state information to the second network device.

With reference to an implementation manner of the third aspect of the present invention, in a first possible implementation manner, the transmission device is a terminal device or a base station device.

According to a fourth aspect, a device for transmitting channel state information is provided, including:

a receiving module, configured to receive channel state information sent by a first network device, where the channel state information includes a precoding matrix indication PMI and selection information that is used to select a matrix element in a precoding matrix indicated by the PMI; and

a transmission module, configured to obtain, according to the channel state information, a precoding matrix used to communicate with the first network device.

With reference to the implementation manner of the fourth aspect of the present invention, in a first possible implementation manner, the transmission module is specifically configured to select, according to the selection information, a matrix element in the precoding matrix indicated by the PMI, and generate, by using the selected matrix element, a precoding matrix used to communicate with the first network device.

According to a fifth aspect, a device for transmitting channel state information is provided, including:

a processor, configured to determine channel state information according to measurement of a reference signal sent by a second network device, where the channel state information includes a precoding matrix indication PMI and selection information that is used to instruct to select a matrix element in a precoding matrix indicated by the PMI; and

a signal transmitter, configured to send the channel state information to the second network device.

With reference to an implementation manner of the fifth aspect of the present invention, in a first possible implementation manner, the transmission device is a terminal device or a base station device.

According to a sixth aspect, a device for transmitting channel state information is provided, including:

a signal receiver, configured to receive channel state information sent by a first network device, where the channel state information includes a precoding matrix indication PMI and selection information that is used to select a matrix element in a precoding matrix indicated by the PMI; and

a processor, configured to obtain, according to the channel state information, a precoding matrix used to communicate with the first network device.

With reference to an implementation manner of the sixth aspect of the present invention, in a first possible implementation manner, the processor is specifically configured to select, according to the selection information, a matrix element in the precoding matrix indicated by the PMI, and generate, by using the selected matrix element, a precoding matrix used to communicate with the first network device.

Beneficial effects of the present invention are as follows:

In the embodiments of the present invention, a first network device determines, according to measurement of a reference signal sent by a second network device, channel state information including a precoding matrix indication PMI and selection information that is used to instruct to select a matrix element in a precoding matrix indicated by the PMI; and sends the channel state information to the second network device. Because the channel state information includes the precoding matrix indication PMI used to instruct the second network device to perform precoding and the selection information that is used to instruct to select a matrix element in a precoding matrix indicated by the PMI, the second network device can determine, according to the selection information for the matrix element, a precoding matrix for performing precoding, and synthesize a channel precoding matrix applicable to a two-dimensional antenna. Therefore, dimensions of the synthesized precoding matrix are closer to a spatial feature of a real channel, which effectively improves precision of a precoding matrix.

## BRIEF DESCRIPTION OF DRAWINGS

FIG. 1 is a schematic flowchart of a method for transmitting channel state information according to Embodiment 1 of the present invention;

FIG. 2 is a schematic flowchart of a method for transmitting channel state information according to Embodiment 3 of the present invention;

FIG. 3 is a schematic diagram of a structure of a device for transmitting channel state information according to Embodiment 4 of the present invention;

FIG. 4 is a schematic diagram of a structure of a device for transmitting channel state information according to Embodiment 5 of the present invention;

FIG. 5 is a schematic diagram of a structure of a device for transmitting channel state information according to Embodiment 6 of the present invention; and

FIG. 6 is a schematic diagram of a structure of a device for transmitting channel state information according to Embodiment 7 of the present invention.

## DESCRIPTION OF EMBODIMENTS

To achieve an objective of the present invention, embodiments of the present invention provide a method and a device for transmitting channel state information. A first network device determines, according to measurement of a reference signal sent by a second network device, channel state information including a precoding matrix indication PMI and selection information that is used to instruct to select a matrix element in a precoding matrix indicated by the PMI; and sends the channel state information to the second network device. Because the channel state information includes the precoding matrix indication PMI used to instruct the second network device to perform precoding and the selection information that is used to instruct to select a matrix element in a precoding matrix indicated by the PMI, the second network device can determine, according to the selection information for the matrix element, a precoding matrix for performing precoding, and synthesize a channel precoding matrix applicable to a two-dimensional antenna. Therefore, dimensions of the synthesized precoding matrix are closer to a spatial feature of a real channel, which effectively improves precision of a precoding matrix.

The following describes the embodiments of the present invention in detail with reference to the accompanying drawings in this specification.

## Embodiment 1

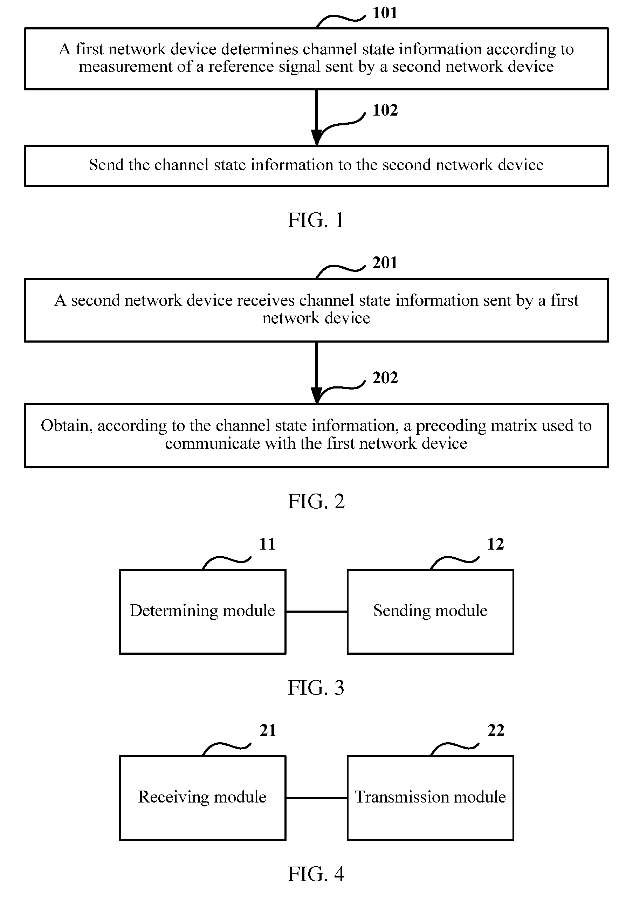

FIG. 1 is a schematic flowchart of a method for transmitting channel state information according to Embodiment 1 of the present invention. The method may be described as follows.

Step 101: A first network device determines channel state information according to measurement of a reference signal sent by a second network device.

The channel state information includes a precoding matrix indication PMI and selection information that is used to instruct to select a matrix element in a precoding matrix indicated by the PMI.

The selection information may be a binary code sequence, or may be represented in another manner, which is not limited herein.

When the selection information is a binary code sequence, a length value of the binary code sequence is a quantity (a Rank value) of columns of the precoding matrix indicated by the PMI.

Specifically, "1" in the binary code sequence is used to indicate a column label of the selected matrix element in the precoding matrix, and "0" in the binary code sequence is used to indicate a column label of an unselected matrix element in the precoding matrix; or "0" in the binary code sequence is used to indicate a column label of the selected matrix element in the precoding matrix, and "1" in the binary code sequence is used to indicate a column label of an unselected matrix element of the precoding matrix.

It should be noted that the selection information that is used to instruct to select a matrix element in a precoding matrix indicated by the PMI includes: column selection information and row selection information.

In step 101, for a double codebook structure, the precoding matrix indicated by the PMI is obtained by synthesizing precoding matrices respectively indicated by two sub-PMIs, for example, W=W1*W2. The synthesis herein belongs to the prior art, is described in an LTE protocol, and is not described in detail.

The channel state information may include at least two pieces of PMI information or may include one piece of PMI information, which is not limited herein.

The channel state information includes selection information for selecting a matrix element in a precoding matrix indicated by at least one PMI.

That is, a quantity of precoding matrices indicated by the PMIs may be the same as or different from a quantity of precoding matrices for performing column selection.

For example, there are two pieces of PMI indication information, indicating that two precoding matrices are indicated; in this case, there may be one piece of selection information that is used to select a matrix element in the precoding matrix indicated by the PMI, indicating that a matrix element in one precoding matrix of two precoding matrices indicated by two PMIs is selected; there may also be two pieces of selection information that are used to select a matrix element in the precoding matrix indicated by the PMI, indicating that matrix elements in two precoding matrices indicated by two PMIs are selected.

In another implementation manner of the present invention, information about at least two PMIs is obtained by means of measurement according to configuration information of different reference signals, or information about at least two PMIs is obtained by means of measurement according to configuration information of different channel state information processes CSI process.

The selection information may be determined in the following manners, and the determining manner are not limited to the following manners.

Manner 1:

when the channel state information includes at least two PMIs, a product of column quantities that are used to instruct to perform column selection on matrix elements in precoding matrices that are respectively indicated by the at least two PMIs is not greater than a first numerical value.

The first numerical value is a first rank indication RI reported by the first network device; or the first numerical value is a first RI configured by the second network device.

In another implementation manner of the present invention, the first numerical value is a smaller one of a quantity of receive antennas of the first network device and a quantity of transmit antennas of the second network device.

For example, not only an antenna in a horizontal dimension but also an antenna in a vertical dimension exists in an active antenna system (AAS, Adaptive Antenna System).

When a terminal device measures two reference signals transmitted by a base station device, one reference signal corresponds to the antenna in a horizontal dimension, and the other reference signal corresponds to the antenna in a vertical dimension. In this case, in addition to a channel in a horizontal dimension, the terminal device can also measure a channel in a vertical dimension.

By measuring reference signals in different dimensions, a precoding matrix of a channel of the antenna in a horizontal dimension is obtained, and may be referred to as a horizontal precoding matrix, may be referred to as a first precoding matrix, or may be referred to as a second precoding matrix, which is not limited herein; a precoding matrix of a channel of the antenna in a vertical dimension may further be obtained, and may be referred to as a vertical precoding matrix, may be referred to as a second precoding matrix, or may be referred to as a first precoding matrix, which is not limited herein.

The channel state information may include two PMIs, where a precoding matrix indicated by one PMI is a precoding matrix in a horizontal dimension, and a precoding matrix indicated by the other PMI is a precoding matrix in a vertical dimension.

Correspondingly, the selection information that is used to instruct to select a matrix element in a precoding matrix indicated by the PMI is:

the selection information includes first column selection information that is used to select a column element from a matrix element in the horizontal precoding matrix, and/or second column selection information that is used to select a column element from a matrix element in the vertical precoding matrix.

Further, a product of a quantity of selected column elements that is included in the first column selection information and a quantity of selected column elements that is included in the second column selection information is not greater than the first numerical value.

The first numerical value is a first RI determined by a receive end; or the first numerical value is a first RI configured by a transmit end.

Specifically, the first numerical value is a smaller one of a quantity of receive antennas of the receive end and a quantity of transmit antennas of the transmit end, and a reason is: a rank of a channel of a 2D antenna array is impossible to exceed a smaller one of the quantity of receive antennas of the receive end and the quantity of transmit antennas of the transmit end.

Alternatively, the first numerical value is a first RI determined by the receive end, the first RI may be a first RI that is obtained after a whole antenna array is mapped to a reference signal and the receive end measures the reference signal, the first RI may basically reflect a real channel feature of the 2D antenna array, and a rank of a synthesized precoding matrix cannot exceed the first RI.

It can be seen that determining the selection information that is used to instruct to select a matrix element in a precoding matrix indicated by the PMI is constrained according to the first numerical value; therefore, an obtained precoding matrix has relatively high precision, which effectively ensures that data streams are transmitted to the greatest extent, and improves a data transmission rate of a network system.

Optionally, when the channel state information includes at least two PMIs, a product of column quantities that are used to instruct to perform column selection on matrix elements in precoding matrices that are respectively indicated by the at least two PMIs is not less than a first numerical value.

The first numerical value is a first rank indication RI reported by the first network device; or the first numerical value is a first RI configured by the second network device.

Further, the first numerical value is a smaller one of a quantity of receive antennas of the first network device and a quantity of transmit antennas of the second network device.

Manner 2:

when the channel state information includes at least two PMIs, quantities, which are used to instruct to perform column selection on matrix elements in precoding matrices respectively indicated by the at least two PMIs, of columns are not greater than a second numerical value.

Herein, the column quantity that is used to perform column selection on a matrix element in the precoding matrix indicated by the PMI is uniquely limited, which is different from that in Manner 1.

Second numerical values for performing column selection on precoding matrices indicated by different PMIs may be different, and may be independently configured.

Similarly, when the channel state information includes at least two PMIs, quantities, which are used to instruct to perform column selection on matrix elements in precoding matrices respectively indicated by the at least two PMIs, of columns are not less than a second numerical value.

The second numerical value is a second rank indication RI reported by the first network device; or the second numerical value is a second RI configured by the second network device.

Further, the second numerical value is a smaller one of a quantity of receive antennas of the first network device and a quantity of transmit antennas of the second network device.

For example, the foregoing horizontal precoding matrix and vertical precoding matrix are still used as an example, the selection information includes first column selection information that is used to select a column element from a matrix element in the horizontal precoding matrix, and/or second column selection information that is used to select a column element from a matrix element in the vertical precoding matrix.

Each of a quantity of selected column elements that is included in the first column selection information and a quantity of selected column elements that is included in the second column selection information is not greater than the second numerical value.

Further, each of the quantity of selected column elements that is included in the first column selection information and the quantity of selected column elements that is included in the second column selection information is not less than the second numerical value.

The second numerical value is a second rank indication RI reported by the first network device; or the second numerical value is a second RI configured by the second network device.

Further, the second numerical value is a smaller one of a quantity of receive antennas of the first network device and a quantity of transmit antennas of the second network device.

Manner 3:

for precoding matrices indicated by different PMIs, the first network device separately determines a third numerical value for performing column selection on a matrix element in each of the precoding matrices.

The third numerical value is a third rank indication RI reported by the first network device; or the third numerical value is a third RI configured by the second network device. Third numerical values for performing column selection on precoding matrices indicated by different PMIs may be different, and may be independently configured.

For example, the foregoing horizontal precoding matrix and vertical precoding matrix are still used as an example, the first network device separately determines that first column selection information for performing column selection on a matrix element in the horizontal precoding matrix is a numerical value; and determines that second column selection information for performing column selection on a matrix element in the vertical precoding matrix is a numerical value.

The numerical value is a third rank indication RI reported by the first network device; or the numerical value is a third RI configured by the second network device.

It should be noted that both the column selection information and row selection information may be in a bitmap signaling format, and a signaling format is not limited to the bitmap signaling format.

When there are at least two included PMIs, an independent coding manner or a joint coding manner is used for the selection information for performing column selection on the precoding matrices indicated by the at least two PMIs.

In the foregoing manners, for the precoding matrix synthesized after element selection is performed on the precoding matrix indicated by the PMI, the dimensions of the precoding matrix better matches a spatial feature of a channel of a whole antenna array, so that precision of the precoding matrix is improved.

In addition, the channel state information further includes channel quality indicator CQI information.

The CQI information may include a first CQI value calculated according to a precoding matrix indicated by each PMI, and/or a second CQI value obtained according to a precoding matrix after column selection is performed on a precoding matrix indicated by each PMI.

The CQI information may further include a third CQI calculated according to a precoding matrix obtained by performing a Kronecker product on precoding matrices indicated by the at least two PMIs, and/or a fourth CQI calculated according to a precoding matrix obtained by performing a Kronecker product on a precoding matrix after column selection is performed on precoding matrices indicated by the at least two PMIs.

It should be noted that the channel state information sent by the first network device further includes:

the first CQI; or
the first CQI and the third CQI; or
a differential value obtained according to the third CQI and at least one first CQI; or
the first CQI and the second CQI; or
a differential value obtained according to the second CQI and at least one first CQI; or
the first CQI and the fourth CQI; or
a differential value obtained according to the fourth CQI and at least one first CQI; or
the second CQI and the fourth CQI; or
the second CQI and a differential value obtained according to the fourth CQI and the second CQI value;
the second CQI and the third CQI; or
the second CQI and a differential value obtained according to the third CQI and the second CQI value; or
the third CQI and the fourth CQI; or
the third CQI and a differential value obtained according to the fourth CQI and the third CQI value.

Step 102: Send the channel state information to the second network device.

In the solution in Embodiment 1 of the present invention, a first network device determines, according to measurement of a reference signal sent by a second network device, channel state information including a precoding matrix indication PMI and selection information that is used to instruct to select a matrix element in a precoding matrix indicated by the PMI; and sends the channel state information to the second network device. Because the channel state information includes the precoding matrix indication PMI used to instruct the second network device to perform precoding and the selection information that is used to instruct to select a matrix element in a precoding matrix indicated by the PMI, the second network device can determine, according to the selection information for the matrix element, a precoding matrix for performing precoding, and synthesize a channel precoding matrix applicable to a two-dimensional antenna. Therefore, dimensions of the synthesized precoding matrix are closer to a spatial feature of a real channel, which effectively improves precision of a precoding matrix.

**Embodiment 2**

The steps in Embodiment 1 of the present invention are described in detail in Embodiment 2 of the present invention by using eight antennas as an example.

A receive end measures a reference signal of a transmit end. A first precoding matrix obtained by means of measurement is $W_h$, and $r_h$ is a rank indication of $W_h$; an obtained second precoding matrix is $W_v$, and $r_v$ is a rank indication of $W_v$, where

$$W_H = \begin{bmatrix} w_{h,0,0} & w_{h,0,1} & \cdots & w_{h,0,r_h-1} \\ w_{h,1,0} & w_{h,1,1} & \cdots & w_{h,1,r_h-1} \\ \vdots & \vdots & \vdots & \vdots \\ w_{h,7,0} & w_{h,7,1} & w_{h,7,2} & w_{h,7,r_h-1} \end{bmatrix},$$

and

$$W_V = \begin{bmatrix} w_{v,0,0} & w_{v,0,1} & \cdots & w_{v,0,r_v-1} \\ w_{v,1,0} & w_{v,1,1} & \cdots & w_{h,1,r_v-1} \\ \vdots & \vdots & \vdots & \vdots \\ w_{v,7,0} & w_{v,7,1} & \cdots & w_{h,7,r_v-1} \end{bmatrix}.$$

Because there are eight receive antennas, values of $r_h$ and $r_v$ are 8.

The receive end determines channel state information according to a measurement result of the reference signal of the transmit end, where the channel state information includes two precoding matrix indications PMIs and selection information that is used to instruct to select matrix elements in precoding matrices indicated by the PMIs.

The precoding matrices indicated by the PMIs are $W_h$ and $W_v$, and the selection information includes first selection information for selecting a matrix element in $W_h$, and second selection information for selecting a matrix element in $W_v$.

Because a rank indication RI of a synthesized precoding matrix of a channel does not exceed min $(r_h, r_v)$, it can be known that the RI of the synthesized precoding matrix does not exceed 8, and matrix elements in the precoding matrices indicated by the PMIs are selected in different manners of determining selection information.

Manner 1:

a product of a quantity of selected column elements that is included in first column selection information and a quantity of selected column elements that is included in second column selection information is not greater than 8.

Assuming that the product of the quantity of selected column elements that is included in the first column selection information and the quantity of selected column elements that is included in the second column selection information is 8, the quantity of selected column elements that is included in the first column selection information may be 1, 2, or 4, and the corresponding quantity of selected column elements that is included in the second column selection information may be 8, 4, or 2.

Description is provided below by using an example in which the quantity of selected column elements that is included in the first column selection information is 4, and the quantity of selected column elements that is included in the second column selection information is 2.

In this case, the determined selection information that is used to instruct to select the matrix elements in the precoding matrices indicated by the PMIs may be represented as: the first column selection information: 10110100; the second column selection information: 00011000.

The receive end sends the determined channel state information to the transmit end, and in this case, the sent channel state information includes a PMI 1 that corresponds to the first column selection information 10110100, and a PMI 2 that corresponds to the second column selection information 00011000.

It should be noted that an indication "1" is defined as a column indication of a selected corresponding matrix. That is, 10110100 indicates that matrix elements in the 1st, 3rd, 4th, and 6th columns in the first precoding matrix are selected, and 00011000 indicates that matrix elements in the 4th and 5th columns in the second precoding matrix are selected,

that is, the matrix elements in the 1st, 3rd, 4th, and 6th columns are selected from

$$W_H = \begin{bmatrix} w_{h,0,0} & w_{h,0,1} & \cdots & w_{h,0,r_h-1} \\ w_{h,1,0} & w_{h,1,1} & \cdots & w_{h,1,r_h-1} \\ \vdots & \vdots & \vdots & \vdots \\ w_{h,7,0} & w_{h,7,1} & w_{h,7,2} & w_{h,7,r_h-1} \end{bmatrix} \text{ to form } W_H' = \begin{bmatrix} w_{h,0,0} & w_{h,0,2} & w_{h,0,3} & w_{h,0,5} \\ w_{h,1,0} & w_{h,1,2} & w_{h,1,3} & w_{h,1,5} \\ \vdots & \vdots & \vdots & \vdots \\ w_{h,7,0} & w_{h,7,2} & w_{h,7,3} & w_{h,7,5} \end{bmatrix},$$

and the matrix elements in the 4th and 5th columns are selected from

$$W_V = \begin{bmatrix} w_{v,0,0} & w_{v,0,1} & \cdots & w_{v,0,r_v-1} \\ w_{v,1,0} & w_{v,1,1} & \cdots & w_{v,1,r_v-1} \\ \vdots & \vdots & \vdots & \vdots \\ w_{v,7,0} & w_{v,7,1} & \cdots & w_{v,7,r_v-1} \end{bmatrix} \text{ to form } W_v' = \begin{bmatrix} w_{v,0,3} & w_{v,0,4} \\ w_{v,1,3} & w_{v,1,4} \\ \vdots & \vdots \\ w_{v,7,3} & w_{v,7,4} \end{bmatrix},$$

so that the transmit end generates a new precoding matrix, that is $W_{2D}' = W_H' \otimes W_v'$ according to the received channel state information.

Manner 2:

neither of a quantity of selected column elements that are included in first column selection information and a quantity of selected column elements that are included in second column selection information is greater than 4.

Assuming that the quantity of selected column elements that are included in the first column selection information is not greater than 4, and the quantity of selected column elements that are included in the second column selection information is not greater than 4, the quantity of selected column elements that are included in the first column selection information may be 1, 2, 3, or 4, and the quantity of selected column elements that are included in the second column selection information may also be 1, 2, 3, or 4.

Description is provided below by using an example in which the quantity of selected column elements that are included in the first column selection information is 2, and the quantity of selected column elements that are included in the second column selection information is 2.

In this case, the determined selection information that is used to instruct to select the matrix elements in the precoding matrices indicated by the PMIs may be represented as: the first column selection information: 00110000; the second column selection information: 00011000.

The receive end sends the determined channel state information to the transmit end, and in this case, the sent channel state information includes a PMI 1 that corresponds to the first column selection information 00110000, and a PMI 2 that corresponds to the second column selection information 00011000.

It should be noted that an indication "1" is defined as a column indication of a selected corresponding matrix. That is, 00110000 indicates that matrix elements in the 3rd and 4th columns in the first precoding matrix are selected, and 00011000 indicates that matrix elements in the 4th and 5th columns in the second precoding matrix are selected, that is, the matrix elements in the 3rd and 4th columns are selected from

$$W_H = \begin{bmatrix} w_{h,0,0} & w_{h,0,1} & \cdots & w_{h,0,r_h-1} \\ w_{h,1,0} & w_{h,1,1} & \cdots & w_{h,1,r_h-1} \\ \vdots & \vdots & \vdots & \vdots \\ w_{h,7,0} & w_{h,7,1} & w_{h,7,2} & w_{h,7,r_h-1} \end{bmatrix} \text{ to form } W_H' = \begin{bmatrix} w_{h,0,2} & w_{h,0,3} \\ w_{h,1,2} & w_{h,1,3} \\ \vdots & \vdots \\ w_{h,7,2} & w_{h,7,3} \end{bmatrix},$$

and the matrix elements in the 4th and 5th columns are selected from

$$W_V = \begin{bmatrix} w_{v,0,0} & w_{v,0,1} & \cdots & w_{v,0,r_v-1} \\ w_{v,1,0} & w_{v,1,1} & \cdots & w_{v,1,r_v-1} \\ \vdots & \vdots & \vdots & \vdots \\ w_{v,7,0} & w_{v,7,1} & \cdots & w_{v,7,r_v-1} \end{bmatrix} \text{ to form } W_v' = \begin{bmatrix} w_{v,0,3} & w_{v,0,4} \\ w_{v,1,3} & w_{v,1,4} \\ \vdots & \vdots \\ w_{v,7,3} & w_{v,7,4} \end{bmatrix},$$

so that the transmit end generates a new precoding matrix, that is, $W_{2D}' = W_H' \otimes W_v'$, according to the received channel state information.

In addition, the channel state information sent by the receive end to the transmit end further includes channel quality indicator CQI information.

The CQI information may include a first CQI value calculated according to a precoding matrix indicated by each PMI, and/or a second CQI value obtained according to a precoding matrix after column selection is performed on a precoding matrix indicated by each PMI.

For example, a first CQI is obtained according to $W_H$, and another first CQI is obtained according to $w_v$;

a second CQI is obtained according to $W_H^{'}$, and another second CQI is obtained according to $W_v^{'}$.

The CQI information may further include a third CQI value calculated according to a precoding matrix obtained by performing a Kronecker product on precoding matrices indicated by at least two PMIs, and/or a fourth CQI value calculated according to a precoding matrix obtained by performing a Kronecker product on a precoding matrix after column selection is performed on precoding matrices indicated by at least two PMIs.

$W_{2D} = W_H \otimes W_v$, and a third CQI is obtained according to $W_{2D}$; $W_{2D}^{'} = W_H^{'} \otimes W_v^{'}$, and a fourth CQI is obtained according to $W_{2D}^{'}$.

It should be noted that the channel state information sent by the receive end further includes:

the first CQI; or
the first CQI and the third CQI; or
a differential value obtained according to the third CQI and at least one first CQI; or
the first CQI and the second CQI; or
a differential value obtained according to the second CQI and at least one first CQI; or
the first CQI and the fourth CQI; or
a differential value obtained according to the fourth CQI and at least one first CQI; or
the second CQI and the fourth CQI; or
the second CQI and a differential value obtained according to the fourth CQI and the second CQI value;
the second CQI and the third CQI; or
the second CQI and a differential value obtained according to the third CQI and the second CQI value; or
the third CQI and the fourth CQI; or
the third CQI and a differential value obtained according to the fourth CQI and the third CQI value.

**Embodiment 3**

FIG. 2 is a schematic flowchart of a method for transmitting channel state information according to Embodiment 3 of the present invention. Embodiment 3 of the present invention is an invention having an inventive concept that is the same as that in Embodiment 1 of the present invention. The method may be described as follows.

Step 201: A second network device receives channel state information sent by a first network device.

The channel state information includes a precoding matrix indication PMI and selection information that is used to select a matrix element in a precoding matrix indicated by the PMI.

In step 201, the channel state information received by the second network device includes the PMI and the selection information, where

for a double codebook structure, the precoding matrix indicated by the PMI is obtained by synthesizing precoding matrices that are respectively indicated by two sub-PMIs.

Specifically, the channel state information includes information about at least two PMIs.

The channel state information includes selection information for selecting matrix elements in precoding matrices indicated by the at least two PMIs.

The information about the at least two PMIs is obtained by the first network device by means of measurement according to configuration information of different reference signals.

The information about the at least two PMIs is obtained by the first network device by means of measurement according to configuration information of different channel state information processes CSI process.

The selection information that is used to instruct to select a matrix element in a precoding matrix indicated by the PMI includes: column selection information and row selection information.

When the channel state information includes at least two PMIs, a product of column quantities that are used to instruct to perform column selection on matrix elements in precoding matrices that are respectively indicated by the at least two PMIs is not greater than a first numerical value.

When the channel state information includes at least two PMIs, a product of column quantities that are used to instruct to perform column selection on matrix elements in precoding matrices that are respectively indicated by the at least two PMIs is not less than a first numerical value.

The first numerical value is a first rank indication RI reported by the first network device; or the first numerical value is a first RI configured by the second network device.

The first numerical value is a smaller one of a quantity of receive antennas of the first network device and a quantity of transmit antennas of the second network device.

When the channel state information includes at least two PMIs, a column quantity that is used to instruct to perform column selection on a matrix element in a precoding matrix indicated by each PMI is not greater than a second numerical value.

When the channel state information includes at least two PMIs, a column quantity that is used to instruct to perform column selection on a matrix element in a precoding matrix indicated by each PMI is not less than a second numerical value.

The second numerical value is a second rank indication RI reported by the first network device; or the second numerical value is a second RI configured by the second network device.

The second numerical value is a smaller one of a quantity of receive antennas of the first network device and a quantity of transmit antennas of the second network device.

For precoding matrices indicated by different PMIs, the first network device separately determines a third numerical value for performing column selection on a matrix element in each of the precoding matrices.

The third numerical value is a third rank indication RI reported by the first network device; or the third numerical value is a third RI configured by the second network device.

The column selection information is in a bitmap signaling format.

An independent coding manner or a joint coding manner is used for the selection information for performing column selection on the precoding matrices indicated by the at least two PMIs.

In another embodiment of the present invention, the channel state information further includes channel quality indicator CQI information, where the CQI information includes a first CQI calculated according to a precoding matrix indicated by each PMI, and/or a second CQI obtained according to a precoding matrix after column selection is performed on the/a precoding matrix indicated by each PMI.

In another embodiment of the present invention, the channel state information further includes channel quality indicator CQI information, where the CQI information includes a third CQI calculated according to a precoding matrix obtained by performing a Kronecker product on precoding matrices indicated by the at least two PMIs, and/or a fourth CQI calculated according to a precoding matrix obtained by performing a Kronecker product on a precoding matrix after column selection is performed on precoding matrices indicated by the at least two PMIs.

In another embodiment of the present invention, the channel state information received by the second network device further includes the first CQI; or

the first CQI and the third CQI; or

a differential value obtained according to the third CQI and at least one first CQI; or

the first CQI and the second CQI; or

a differential value obtained according to the second CQI and at least one first CQI; or

the first CQI and the fourth CQI; or

a differential value obtained according to the fourth CQI and at least one first CQI; or

the second CQI and the fourth CQI; or

the second CQI and a differential value obtained according to the fourth CQI and the second CQI value;

the second CQI and the third CQI; or

the second CQI and a differential value obtained according to the third CQI and the second CQI value; or

the third CQI and the fourth CQI; or

the third CQI and a differential value obtained according to the fourth CQI and the third CQI value.

Step 202: Obtain, according to the channel state information, a precoding matrix used to communicate with the first network device.

In step 202, the obtaining, according to the channel state information a precoding matrix used to communicate with the first network device includes:

selecting, by the second network device according to the selection information, a matrix element in the precoding matrix indicated by the PMI, and generating, by using the selected matrix element, a precoding matrix used to communicate with the first network device.

## Embodiment 4

FIG. 3 is a schematic diagram of a structure of a device for transmitting channel state information according to Embodiment 4 of the present invention. Embodiment 4 of the present invention is an invention having an inventive concept that is the same as those in Embodiment 1 of the present invention to Embodiment 3 of the present invention. The device includes: a determining module 11 and a sending module 12, where

the determining module 11 is configured to determine channel state information according to measurement of a reference signal sent by a second network device, where the channel state information includes a precoding matrix indication PMI and selection information that is used to instruct to select a matrix element in a precoding matrix indicated by the PMI; and the sending module 12 is configured to send the channel state information to the second network device.

In another embodiment of the present invention, the channel state information includes the PMI and the selection information, where

for a double codebook structure, the precoding matrix indicated by the PMI is obtained by synthesizing precoding matrices that are respectively indicated by two sub-PMIs.

Specifically, the channel state information includes information about at least two PMIs.

The channel state information includes selection information for selecting matrix elements in precoding matrices indicated by the at least two PMIs.

The information about the at least two PMIs is obtained by means of measurement according to configuration information of different reference signals.

The information about the at least two PMIs is obtained by means of measurement according to configuration information of different channel state information processes CSI process.

The selection information that is used to instruct to select a matrix element in a precoding matrix indicated by the PMI includes: column selection information and row selection information.

When the channel state information includes at least two PMIs, a product of column quantities that are used to instruct to perform column selection on matrix elements in precoding matrices that are respectively indicated by the at least two PMIs is not greater than a first numerical value.

When the channel state information includes at least two PMIs, a product of column quantities that are used to instruct to perform column selection on matrix elements in precoding matrices that are respectively indicated by the at least two PMIs is not less than a first numerical value.

The first numerical value is a first rank indication RI reported by the first network device; or the first numerical value is a first RI configured by the second network device.

The first numerical value is a smaller one of a quantity of receive antennas of the first network device and a quantity of transmit antennas of the second network device.

When the channel state information includes at least two PMIs, a column quantity that is used to instruct to perform column selection on a matrix element in a precoding matrix indicated by each PMI is not greater than a second numerical value.

When the channel state information includes at least two PMIs, a column quantity that is used to instruct to perform column selection on a matrix element in a precoding matrix indicated by each PMI is not less than a second numerical value.

The second numerical value is a second rank indication RI reported by the first network device; or the second numerical value is a second RI configured by the second network device.

The second numerical value is a smaller one of a quantity of receive antennas of the first network device and a quantity of transmit antennas of the second network device.

For precoding matrices indicated by different PMIs, the first network device separately determines a third numerical value for performing column selection on a matrix element in each of the precoding matrices.

The third numerical value is a third rank indication RI reported by the first network device; or the third numerical value is a third RI configured by the second network device.

The column selection information is in a bitmap signaling format.

An independent coding manner or a joint coding manner is used for the selection information for performing column selection on the precoding matrices indicated by the at least two PMIs.

In another embodiment of the present invention, the channel state information further includes channel quality indicator CQI information, where the CQI information includes a first CQI calculated according to a precoding matrix indicated by each PMI, and/or a second CQI obtained according to a precoding matrix after column selection is performed on the/a precoding matrix indicated by each PMI.

In another embodiment of the present invention, the channel state information further includes channel quality indicator CQI information, where the CQI information includes a third CQI calculated according to a precoding matrix obtained by performing a Kronecker product on precoding matrices indicated by the at least two PMIs, and/or a fourth CQI calculated according to a precoding matrix obtained by performing a Kronecker product on a precoding matrix after column selection is performed on precoding matrices indicated by the at least two PMIs.

In another embodiment of the present invention, the channel state information further includes:

the first CQI; or

the first CQI and the third CQI; or

a differential value obtained according to the third CQI and at least one first CQI; or

the first CQI and the second CQI; or

a differential value obtained according to the second CQI and at least one first CQI; or

the first CQI and the fourth CQI; or

a differential value obtained according to the fourth CQI and at least one first CQI; or

the second CQI and the fourth CQI; or

the second CQI and a differential value obtained according to the fourth CQI and the second CQI value;

the second CQI and the third CQI; or

the second CQI and a differential value obtained according to the third CQI and the second CQI value; or

the third CQI and the fourth CQI; or

the third CQI and a differential value obtained according to the fourth CQI and the third CQI value.

It should be noted that the device described in Embodiment 4 of the present invention may be a terminal device, or may be a base station device, and may be implemented by using hardware, or may be implemented by using software, which is not limited herein.

**Embodiment 5**

FIG. 4 is a schematic diagram of a structure of a device for transmitting channel state information according to Embodiment 5 of the present invention. Embodiment 5 of the present invention is an invention having an inventive concept that is the same as those in Embodiment 1 of the present invention to Embodiment 4. The device includes: a receiving module 21 and a transmission module 22, where

the receiving module 21 is configured to receive channel state information sent by a first network device, where the channel state information includes a precoding matrix indication PMI and selection information that is used to select a matrix element in a precoding matrix indicated by the PMI; and

the transmission module 22 is configured to obtain, according to the channel state information, a precoding matrix used to communicate with the first network device.

In another embodiment of the present invention, the transmission module 22 is specifically configured to select, according to the selection information, a matrix element in the precoding matrix indicated by the PMI, and generate, by using the selected matrix element, a precoding matrix used to communicate with the first network device.

In another embodiment of the present invention, the channel state information includes the PMI and the selection information, where

for a double codebook structure, the precoding matrix indicated by the PMI is obtained by synthesizing precoding matrices that are respectively indicated by two sub-PMIs.

Specifically, the channel state information includes information about at least two PMIs.

The channel state information includes selection information for selecting matrix elements in precoding matrices indicated by the at least two PMIs.

The information about the at least two PMIs is obtained by the first network device by means of measurement according to configuration information of different reference signals.

The information about the at least two PMIs is obtained by the first network device by means of measurement according to configuration information of different channel state information processes CSI process.

The selection information that is used to instruct to select a matrix element in a precoding matrix indicated by the PMI includes: column selection information and row selection information.

When the channel state information includes at least two PMIs, a product of column quantities that are used to instruct to perform column selection on matrix elements in precoding matrices that are respectively indicated by the at least two PMIs is not greater than a first numerical value.

When the channel state information includes at least two PMIs, a product of column quantities that are used to instruct to perform column selection on matrix elements in precoding matrices that are respectively indicated by the at least two PMIs is not less than a first numerical value.

The first numerical value is a first rank indication RI reported by the first network device; or the first numerical value is a first RI configured by the second network device.

The first numerical value is a smaller one of a quantity of receive antennas of the first network device and a quantity of transmit antennas of the second network device.

When the channel state information includes at least two PMIs, a column quantity that is used to instruct to perform column selection on a matrix element in a precoding matrix indicated by each PMI is not greater than a second numerical value.

When the channel state information includes at least two PMIs, a column quantity that is used to instruct to perform column selection on a matrix element in a precoding matrix indicated by each PMI is not less than a second numerical value.

The second numerical value is a second rank indication RI reported by the first network device; or the second numerical value is a second RI configured by the second network device.

The second numerical value is a smaller one of a quantity of receive antennas of the first network device and a quantity of transmit antennas of the second network device.

For precoding matrices indicated by different PMIs, the first network device separately determines a third numerical value for performing column selection on a matrix element in each of the precoding matrices.

The third numerical value is a third rank indication RI reported by the first network device; or the third numerical value is a third RI configured by the second network device.

The column selection information is in a bitmap signaling format.

An independent coding manner or a joint coding manner is used for the selection information for performing column selection on the precoding matrices indicated by the at least two PMIs.

In another embodiment of the present invention, the channel state information received by the second network device further includes channel quality indicator CQI information, where the CQI information includes a first CQI calculated according to a precoding matrix indicated by each PMI, and/or a second CQI obtained according to a precoding matrix after column selection is performed on the/a precoding matrix indicated by each PMI.

In another embodiment of the present invention, the channel state information received by the second network device further includes channel quality indicator CQI information, where the CQI information includes a third CQI calculated according to a precoding matrix obtained by performing a Kronecker product on precoding matrices indicated by the at least two PMIs, and/or a fourth CQI calculated according to a precoding matrix obtained by performing a Kronecker product on a precoding matrix after column selection is performed on precoding matrices indicated by the at least two PMIs.

In another embodiment of the present invention, the channel state information received by the second network device further includes the first CQI; or

the first CQI and the third CQI; or

a differential value obtained according to the third CQI and at least one first CQI; or

the first CQI and the second CQI; or

a differential value obtained according to the second CQI and at least one first CQI; or

the first CQI and the fourth CQI; or

a differential value obtained according to the fourth CQI and at least one first CQI; or

the second CQI and the fourth CQI; or

the second CQI and a differential value obtained according to the fourth CQI and the second CQI value;

the second CQI and the third CQI; or

the second CQI and a differential value obtained according to the third CQI and the second CQI value; or

the third CQI and the fourth CQI; or

the third CQI and a differential value obtained according to the fourth CQI and the third CQI value.

It should be noted that the device described in Embodiment 5 of the present invention may be a terminal device, or may be a base station device, and may be implemented by using hardware, or may be implemented by using software, which is not limited herein.

Compared with Embodiment 4 of the present invention, a difference is: Embodiment 4 of the present invention describes a receive end for channel transmission, and Embodiment 5 of the present invention describes a transmit end for channel transmission.

**Embodiment 6**

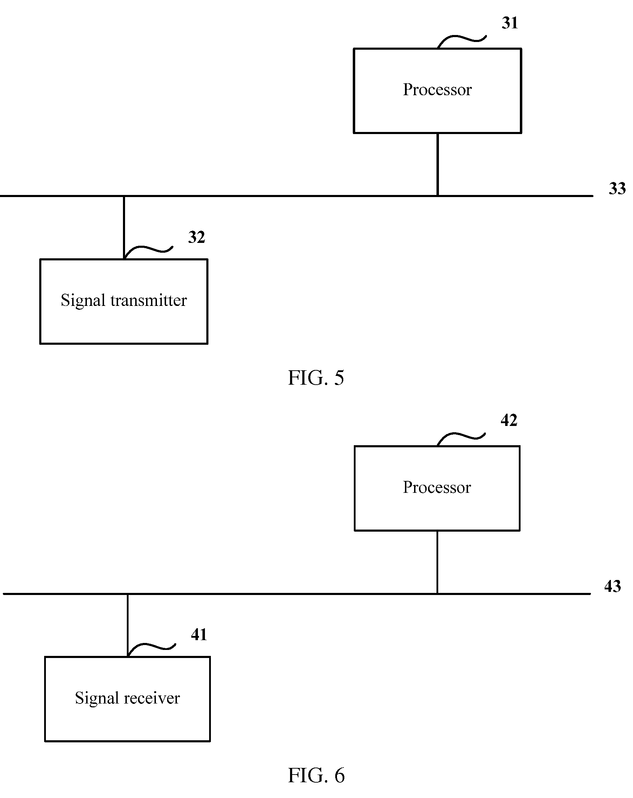

FIG. 5 is a schematic diagram of a structure of a device for transmitting channel state information according to Embodiment 6 of the present invention. Embodiment 6 of the present invention is an invention having an inventive concept that is the same as those in Embodiment 1 of the present invention to Embodiment 5 of the present invention. The device includes: a processor 31 and a signal transmitter 32, where the processor 31 is connected to the signal transmitter 32 by using a bus 33, where

the processor 31 is configured to determine channel state information according to measurement of a reference signal sent by a second network device, where the channel state information includes a precoding matrix indication PMI and selection information that is used to instruct to select a matrix element in a precoding matrix indicated by the PMI; and the signal transmitter 32 is configured to send the channel state information to the second network device.

In another embodiment of the present invention, the channel state information includes the PMI and the selection information, where

for a double codebook structure, the precoding matrix indicated by the PMI is obtained by synthesizing precoding matrices that are respectively indicated by two sub-PMIs.

Specifically, the channel state information includes information about at least two PMIs.

The channel state information includes selection information for selecting matrix elements in precoding matrices indicated by the at least two PMIs.

The information about the at least two PMIs is obtained by means of measurement according to configuration information of different reference signals.

The information about the at least two PMIs is obtained by means of measurement according to configuration information of different channel state information processes CSI process.

The selection information that is used to instruct to select a matrix element in a precoding matrix indicated by the PMI includes: column selection information and row selection information.

When the channel state information includes at least two PMIs, a product of column quantities that are used to instruct to perform column selection on matrix elements in precoding matrices that are respectively indicated by the at least two PMIs is not greater than a first numerical value.

When the channel state information includes at least two PMIs, a product of column quantities that are used to instruct to perform column selection on matrix elements in precoding matrices that are respectively indicated by the at least two PMIs is not less than a first numerical value.

The first numerical value is a first rank indication RI reported by the first network device; or the first numerical value is a first RI configured by the second network device.

The first numerical value is a smaller one of a quantity of receive antennas of the first network device and a quantity of transmit antennas of the second network device.

When the channel state information includes at least two PMIs, a column quantity that is used to instruct to perform column selection on a matrix element in a precoding matrix indicated by each PMI is not greater than a second numerical value.

When the channel state information includes at least two PMIs, a column quantity that is used to instruct to perform column selection on a matrix element in a precoding matrix indicated by each PMI is not less than a second numerical value.

The second numerical value is a second rank indication RI reported by the first network device; or the second numerical value is a second RI configured by the second network device.

The second numerical value is a smaller one of a quantity of receive antennas of the first network device and a quantity of transmit antennas of the second network device.

For precoding matrices indicated by different PMIs, the first network device separately determines a third numerical value for performing column selection on a matrix element in each of the precoding matrices.

The third numerical value is a third rank indication RI reported by the first network device; or the third numerical value is a third RI configured by the second network device.

The column selection information is in a bitmap signaling format.

An independent coding manner or a joint coding manner is used for the selection information for performing column selection on the precoding matrices indicated by the at least two PMIs.

In another embodiment of the present invention, the channel state information further includes channel quality indicator CQI information, where the CQI information includes a first CQI calculated according to a precoding matrix indicated by each PMI, and/or a second CQI obtained according to a precoding matrix after column selection is performed on the/a precoding matrix indicated by each PMI.

In another embodiment of the present invention, the channel state information further includes channel quality indicator CQI information, where the CQI information includes a third CQI calculated according to a precoding matrix obtained by performing a Kronecker product on precoding matrices indicated by the at least two PMIs, and/or a fourth CQI calculated according to a precoding matrix obtained by performing a Kronecker product on a precoding matrix after column selection is performed on precoding matrices indicated by the at least two PMIs.

In another embodiment of the present invention, the channel state information further includes:

the first CQI; or
the first CQI and the third CQI; or
a differential value obtained according to the third CQI and at least one first CQI; or
the first CQI and the second CQI; or
a differential value obtained according to the second CQI and at least one first CQI; or
the first CQI and the fourth CQI; or
a differential value obtained according to the fourth CQI and at least one first CQI; or
the second CQI and the fourth CQI; or
the second CQI and a differential value obtained according to the fourth CQI and the second CQI value;
the second CQI and the third CQI; or
the second CQI and a differential value obtained according to the third CQI and the second CQI value; or

the third CQI and the fourth CQI; or

the third CQI and a differential value obtained according to the fourth CQI and the third CQI value.

It should be noted that the device described in Embodiment 6 of the present invention may be a terminal device, or may be a base station device, and may be implemented by using hardware, or may be implemented by using software, which is not limited herein.

**Embodiment 7**

FIG. 6 is a schematic diagram of a structure of a device for transmitting channel state information according to Embodiment 7 of the present invention. Embodiment 7 of the present invention is an invention having an inventive concept that is the same as those in Embodiment 1 of the present invention to Embodiment 6 of the present invention. The device includes: a signal receiver 41 and a processor 42, where the signal receiver 41 is connected to the processor 42 by using a bus 43, where

the signal receiver 41 is configured to receive channel state information sent by a first network device, where the channel state information includes a precoding matrix indication PMI and selection information that is used to select a matrix element in a precoding matrix indicated by the PMI; and

the processor 42 is configured to obtain, according to the channel state information, a precoding matrix used to communicate with the first network device.

In another embodiment of the present invention, the processor 42 is specifically configured to select, according to the selection information, a matrix element in the precoding matrix indicated by the PMI, and generate, by using the selected matrix element, a precoding matrix used to communicate with the first network device.

In another embodiment of the present invention, the channel state information includes the PMI and the selection information, where

for a double codebook structure, the precoding matrix indicated by the PMI is obtained by synthesizing precoding matrices that are respectively indicated by two sub-PMIs.

Specifically, the channel state information includes information about at least two PMIs.

The channel state information includes selection information for selecting matrix elements in precoding matrices indicated by the at least two PMIs.

The information about the at least two PMIs is obtained by the first network device by means of measurement according to configuration information of different reference signals.

The information about the at least two PMIs is obtained by the first network device by means of measurement according to configuration information of different channel state information processes CSI process.

The selection information that is used to instruct to select a matrix element in a precoding matrix indicated by the PMI includes: column selection information and row selection information.

When the channel state information includes at least two PMIs, a product of column quantities that are used to instruct to perform column selection on matrix elements in precoding matrices that are respectively indicated by the at least two PMIs is not greater than a first numerical value.

When the channel state information includes at least two PMIs, a product of column quantities that are used to instruct to perform column selection on matrix elements in precoding matrices that are respectively indicated by the at least two PMIs is not less than a first numerical value.

The first numerical value is a first rank indication RI reported by the first network device; or the first numerical value is a first RI configured by the second network device.

The first numerical value is a smaller one of a quantity of receive antennas of the first network device and a quantity of transmit antennas of the second network device.

When the channel state information includes at least two PMIs, a column quantity that is used to instruct to perform column selection on a matrix element in a precoding matrix indicated by each PMI is not greater than a second numerical value.

When the channel state information includes at least two PMIs, a column quantity that is used to instruct to perform column selection on a matrix element in a precoding matrix indicated by each PMI is not less than a second numerical value.

The second numerical value is a second rank indication RI reported by the first network device; or the second numerical value is a second RI configured by the second network device.

The second numerical value is a smaller one of a quantity of receive antennas of the first network device and a quantity of transmit antennas of the second network device.

For precoding matrices indicated by different PMIs, the first network device separately determines a third numerical value for performing column selection on a matrix element in each of the precoding matrices.

The third numerical value is a third rank indication RI reported by the first network device; or the third numerical value is a third RI configured by the second network device.

The column selection information is in a bitmap signaling format.

An independent coding manner or a joint coding manner is used for the selection information for performing column selection on the precoding matrices indicated by the at least two PMIs.

In another embodiment of the present invention, the channel state information received by the second network device further includes channel quality indicator CQI information, where the CQI information includes a first CQI calculated according to a precoding matrix indicated by each PMI, and/or a second CQI obtained according to a precoding matrix after column selection is performed on the/a precoding matrix indicated by each PMI.

In another embodiment of the present invention, the channel state information received by the second network device further includes channel quality indicator CQI information, where the CQI information includes a third CQI calculated according to a precoding matrix obtained by performing a Kronecker product on precoding matrices indicated by the at least two PMIs, and/or a fourth CQI calculated according to a precoding matrix obtained by performing a Kronecker product on a precoding matrix after column selection is performed on precoding matrices indicated by the at least two PMIs.

In another embodiment of the present invention, the channel state information received by the second network device further includes the first CQI; or

the first CQI and the third CQI; or

a differential value obtained according to the third CQI and at least one first CQI; or

the first CQI and the second CQI; or

a differential value obtained according to the second CQI and at least one first CQI; or

the first CQI and the fourth CQI; or

a differential value obtained according to the fourth CQI and at least one first CQI; or

the second CQI and the fourth CQI; or

the second CQI and a differential value obtained according to the fourth CQI and the second CQI value;

the second CQI and the third CQI; or

the second CQI and a differential value obtained according to the third CQI and the second CQI value; or

the third CQI and the fourth CQI; or

the third CQI and a differential value obtained according to the fourth CQI and the third CQI value.

It should be noted that the device described in Embodiment 7 of the present invention may be a terminal device, or may be a base station device, and may be implemented by using hardware, or may be implemented by using software, which is not limited herein.

Compared with Embodiment 6 of the present invention, a difference is: Embodiment 6 of the present invention describes a receive end for channel transmission, and Embodiment 7 of the present invention describes a transmit end for channel transmission.

Persons skilled in the art should understand that the embodiments of the present invention may be provided as a method, an apparatus (device), or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the apparatus (device), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the exemplary embodiments and all changes and modifications falling within the scope of the present invention.

Obviously, persons skilled in the art can make various modifications and variations to the present invention without departing from the spirit and scope of the present invention. The present invention is intended to cover these modifications and variations provided that they fall within the scope of protection defined by the following claims and their equivalent technologies.

**Claims**

1. A method for transmitting channel state information, comprising:

   determining, by a first network device, channel state information according to measurement of a reference signal sent by a second network device, wherein the channel state information comprises a precoding matrix indication PMI and selection information that is used to instruct to select a matrix element in a precoding matrix indicated by the PMI; and
   sending the channel state information to the second network device.

2. The method according to claim 1, wherein
   for a double codebook structure, the precoding matrix indicated by the PMI is obtained by synthesizing precoding matrices that are respectively indicated by two sub-PMIs.

3. The method according to claim 1, wherein the channel state information comprises information about at least two PMIs.

4. The method according to claim 1 or 3, wherein the channel state information comprises selection information for selecting matrix elements in precoding matrices indicated by the at least two PMIs.

5. The method according to claim 3, wherein the information about the at least two PMIs is obtained by means of measurement according to configuration information of different reference signals.

6. The method according to claim 3, wherein the information about the at least two PMIs is obtained by means of measurement according to configuration information of different channel state information processes CSI process.

7. The method according to any one of claims 1 to 4, wherein the selection information that is used to instruct to select a matrix element in a precoding matrix indicated by the PMI comprises:

   column selection information and row selection information.

8. The method according to any one of claims 1 to 7, wherein when the channel state information comprises at least two PMIs, a product of column quantities that are used to instruct to perform column selection on matrix elements in precoding matrices that are respectively indicated by the at least two PMIs is not greater than a first numerical value.

9. The method according to any one of claims 1 to 7, wherein when the channel state information comprises at least two PMIs, a product of column quantities that are used to instruct to perform column selection on matrix elements in precoding matrices that are respectively indicated by the at least two PMIs is not less than a first numerical value.

10. The method according to claim 8 or 9, wherein the first numerical value is a first rank indication RI reported by the first network device; or the first numerical value is a first RI configured by the second network device.

11. The method according to claim 8 or 9, wherein the first numerical value is a smaller one of a quantity of receive antennas of the first network device and a quantity of transmit antennas of the second network device.

12. The method according to any one of claims 1 to 7, wherein when the channel state information comprises at least two PMIs, a column quantity that is used to instruct to perform column selection on a matrix element in a precoding matrix indicated by each PMI is not greater than a second numerical value.

13. The method according to any one of claims 1 to 7, wherein when the channel state information comprises at least two PMIs, a column quantity that is used to instruct to perform column selection on a matrix element in a precoding matrix indicated by each PMI is not less than a second numerical value.

14. The method according to claim 12 or 13, wherein the second numerical value is a second rank indication RI reported by the first network device; or the second numerical value is a second RI configured by the second network device.

15. The method according to claim 12 or 13, wherein the second numerical value is a smaller one of a quantity of receive antennas of the first network device and a quantity of transmit antennas of the second network device.

16. The method according to any one of claims 12 to 15, wherein
for precoding matrices indicated by different PMIs, the first network device separately determines a third numerical value for performing column selection on a matrix element in each of the precoding matrices.

17. The method according to claim 16, wherein the third numerical value is a third rank indication RI reported by the first network device; or the third numerical value is a third RI configured by the second network device.

18. The method according to claims 1 to 17, wherein the column selection information is in a bitmap signaling format.

19. The method according to claims 1 to 18, wherein an independent coding manner or a joint coding manner is used for the selection information for performing column selection on the precoding matrices indicated by the at least two PMIs.

20. The method according to claim 1, wherein the channel state information further comprises channel quality indicator CQI information, wherein the CQI information comprises a first CQI calculated according to a precoding matrix indicated by each PMI, and/or a second CQI obtained according to a precoding matrix after column selection is performed on the/a precoding matrix indicated by each PMI.

21. The method according to claim 1, wherein the channel state information further comprises channel quality indicator CQI information, wherein the CQI information comprises a third CQI calculated according to a precoding matrix obtained by performing a Kronecker product on precoding matrices indicated by the at least two PMIs, and/or a fourth CQI calculated according to a precoding matrix obtained by performing a Kronecker product on a precoding matrix after column selection is performed on precoding matrices indicated by the at least two PMIs.

22. The method according to claim 20 or 21, wherein the channel state information sent by the first network device further comprises the first CQI; or
the first CQI and the third CQI; or
a differential value obtained according to the third CQI and at least one first CQI; or
the first CQI and the second CQI; or
a differential value obtained according to the second CQI and at least one first CQI; or
the first CQI and the fourth CQI; or
a differential value obtained according to the fourth CQI and at least one first CQI; or
the second CQI and the fourth CQI; or
the second CQI and a differential value obtained according to the fourth CQI and the second CQI value;
the second CQI and the third CQI; or
the second CQI and a differential value obtained according to the third CQI and the second CQI value; or
the third CQI and the fourth CQI; or
the third CQI and a differential value obtained according to the fourth CQI and the third CQI value.

23. The method according to claim 1, wherein
the first network device is a terminal device, and the second network device is a base station device; or
the first network device is a terminal device, and the second network device is a terminal device; or
the first network device is a base station device, and the second network device is a base station device.

24. A method for transmitting channel state information, comprising:

receiving, by a second network device, channel state information sent by a first network device, wherein the channel state information comprises a precoding matrix indication PMI and selection information that is used to select a matrix element in a precoding matrix indicated by the PMI; and

obtaining, according to the channel state information, a precoding matrix used to communicate with the first network device.

25. The method according to claim 24, wherein the obtaining, according to the channel state information, a precoding matrix used to communicate with the first network device comprises:

selecting, by the second network device according to the selection information, a matrix element in the precoding matrix indicated by the PMI, and generating, by using the selected matrix element, a precoding matrix used to communicate with the first network device.

26. The method according to claim 24, wherein

for a double codebook structure, the precoding matrix indicated by the PMI is obtained by synthesizing precoding matrices that are respectively indicated by two sub-PMIs.

27. The method according to claim 24, wherein the channel state information comprises information about at least two PMIs.

28. The method according to claim 24 or 27, wherein the channel state information comprises selection information for selecting matrix elements in precoding matrices indicated by the at least two PMIs.

29. The method according to claim 27, wherein the information about the at least two PMIs is obtained by the first network device by means of measurement according to configuration information of different reference signals.

30. The method according to claim 27, wherein the information about the at least two PMIs is obtained by the first network device by means of measurement according to configuration information of different channel state information processes CSI process.

31. The method according to any one of claims 24 to 28, wherein the selection information that is used to instruct to select a matrix element in a precoding matrix indicated by the PMI comprises: column selection information and row selection information.

32. The method according to any one of claims 24 to 31, wherein when the channel state information comprises at least two PMIs, a product of column quantities that are used to instruct to perform column selection on matrix elements in precoding matrices that are respectively indicated by the at least two PMIs is not greater than a first numerical value.

33. The method according to any one of claims 24 to 31, wherein when the channel state information comprises at least two PMIs, a product of column quantities that are used to instruct to perform column selection on matrix elements in precoding matrices that are respectively indicated by the at least two PMIs is not less than a first numerical value.

34. The method according to claim 32 or 33, wherein the first numerical value is a first rank indication RI reported by the first network device; or the first numerical value is a first RI configured by the second network device.

35. The method according to claim 32 or 33, wherein the first numerical value is a smaller one of a quantity of receive antennas of the first network device and a quantity of transmit antennas of the second network device.

36. The method according to any one of claims 24 to 31, wherein when the channel state information comprises at least two PMIs, a column quantity that is used to instruct to perform column selection on a matrix element in a precoding matrix indicated by each PMI is not greater than a second numerical value.

37. The method according to any one of claims 24 to 31, wherein when the channel state information comprises at least two PMIs, a column quantity that is used to instruct to perform column selection on a matrix element in a precoding matrix indicated by each PMI is not less than a second numerical value.

38. The method according to claim 36 or 37, wherein the second numerical value is a second rank indication RI reported by the first network device; or the second numerical value is a second RI configured by the second network device.

39. The method according to claim 36 or 37, wherein the second numerical value is a smaller one of a quantity of receive antennas of the first network device and a quantity of transmit antennas of the second network device.

40. The method according to any one of claims 36 to 39, wherein
for precoding matrices indicated by different PMIs, the first network device separately determines a third numerical value for performing column selection on a matrix element in each of the precoding matrices.

41. The method according to claim 40, wherein the third numerical value is a third rank indication RI reported by the first network device; or the third numerical value is a third RI configured by the second network device.

42. The method according to claims 24 to 41, wherein the column selection information is in a bitmap signaling format.

43. The method according to claims 24 to 42, wherein an independent coding manner or a joint coding manner is used for the selection information for performing column selection on the precoding matrices indicated by the at least two PMIs.

44. The method according to claim 24, wherein the channel state information further comprises channel quality indicator CQI information, wherein the CQI information comprises a first CQI calculated according to a precoding matrix indicated by each PMI, and/or a second CQI obtained according to a precoding matrix after column selection is performed on the/a precoding matrix indicated by each PMI.

45. The method according to claim 24, wherein the channel state information further comprises channel quality indicator CQI information, wherein the CQI information comprises a third CQI calculated according to a precoding matrix obtained by performing a Kronecker product on precoding matrices indicated by the at least two PMIs, and/or a fourth CQI calculated according to a precoding matrix obtained by performing a Kronecker product on a precoding matrix after column selection is performed on precoding matrices indicated by the at least two PMIs.

46. The method according to claim 44 or 45, wherein the channel state information received by the second network device further comprises the first CQI; or
the first CQI and the third CQI; or
a differential value obtained according to the third CQI and at least one first CQI; or
the first CQI and the second CQI; or
a differential value obtained according to the second CQI and at least one first CQI; or
the first CQI and the fourth CQI; or
a differential value obtained according to the fourth CQI and at least one first CQI; or
the second CQI and the fourth CQI; or
the second CQI and a differential value obtained according to the fourth CQI and the second CQI value;
the second CQI and the third CQI; or
the second CQI and a differential value obtained according to the third CQI and the second CQI value; or
the third CQI and the fourth CQI; or
the third CQI and a differential value obtained according to the fourth CQI and the third CQI value.

47. A device for transmitting channel state information, comprising:

a determining module, configured to determine channel state information according to measurement of a reference signal sent by a second network device, wherein the channel state information comprises a precoding matrix indication PMI and selection information that is used to instruct to select a matrix element in a precoding matrix indicated by the PMI; and
a sending module, configured to send the channel state information to the second network device.

48. The transmission device according to claim 47, wherein the transmission device is a terminal device or a base station device.

49. A device for transmitting channel state information, comprising:

a receiving module, configured to receive channel state information sent by a first network device, wherein the channel state information comprises a precoding matrix indication PMI and selection information that is used to select a matrix element in a precoding matrix indicated by the PMI; and
a transmission module, configured to obtain, according to the channel state information, a precoding matrix used to communicate with the first network device.

**50.** The transmission device according to claim 49, wherein
the transmission module is specifically configured to select, according to the selection information, a matrix element in the precoding matrix indicated by the PMI, and generate, by using the selected matrix element, a precoding matrix used to communicate with the first network device.

**51.** A device for transmitting channel state information, comprising:

a processor, configured to determine channel state information according to measurement of a reference signal sent by a second network device, wherein the channel state information comprises a precoding matrix indication PMI and selection information that is used to instruct to select a matrix element in a precoding matrix indicated by the PMI; and
a signal transmitter, configured to send the channel state information to the second network device.

**52.** The transmission device according to claim 50, wherein the transmission device is a terminal device or a base station device.

**53.** A device for transmitting channel state information, comprising:

a signal receiver, configured to receive channel state information sent by a first network device, wherein the channel state information comprises a precoding matrix indication PMI and selection information that is used to select a matrix element in a precoding matrix indicated by the PMI; and
a processor, configured to obtain, according to the channel state information, a precoding matrix used to communicate with the first network device.

**54.** The transmission device according to claim 53, wherein
the processor is specifically configured to select, according to the selection information, a matrix element in the precoding matrix indicated by the PMI, and generate, by using the selected matrix element, a precoding matrix used to communicate with the first network device.

101

A first network device determines channel state information according to measurement of a reference signal sent by a second network device

102

Send the channel state information to the second network device

FIG. 1

201

A second network device receives channel state information sent by a first network device

202

Obtain, according to the channel state information, a precoding matrix used to communicate with the first network device

FIG. 2

11

Determining module

12

Sending module

FIG. 3

21

Receiving module

22

Transmission module

FIG. 4

**31**

Processor

**33**

**32**

Signal transmitter

FIG. 5

**42**

Processor

**43**

**41**

Signal receiver

FIG. 6

# INTERNATIONAL SEARCH REPORT

| International application No. |
|---|
| PCT/CN2013/090726 |

## A. CLASSIFICATION OF SUBJECT MATTER

H04B 7/04 (2006.01) i

According to International Patent Classification (IPC) or to both national classification and IPC

## B. FIELDS SEARCHED

Minimum documentation searched (classification system followed by classification symbols)

IPC: H04B; H04L; H04W; H04Q

Documentation searched other than minimum documentation to the extent that such documents are included in the fields searched

Electronic data base consulted during the international search (name of data base and, where practicable, search terms used)

CNTXT, VEN, BAIDU, CNKI, 3GPP: precoding w matrix, reference w signal, measure+, determine+, calculat+, obtain+, element, select+, three w dimension (in Chinese), CSI, PMI, 3D, RI, rank, channel w (status or state) w information, precoding, matrix, indicator, index, beam w forming, determin+

## C. DOCUMENTS CONSIDERED TO BE RELEVANT

| Category* | Citation of document, with indication, where appropriate, of the relevant passages | Relevant to claim No. |
|---|---|---|
| A | CN 102647751 A (SHANGHAI ALCATEL-LUCENT CO., LTD.) 22 August 2012 (22.08.2012) the abstract, claims 1-15 | 1-54 |
| A | CN 102859894 A (LG ELECTRONICS INC.) 02 January 2013 (02.01.2013) the abstract, claims 1-12 | 1-54 |
| A | CN 101969363 A (ZTE CORPORATION) 09 February 2011 (09.02.2011) the abstract, claims 1-12 | 1-54 |

☒ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 26 September 2014 | 26 November 2014 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer WU, Xinghua Telephone No. (86-10) 62089556 |
|---|---|

Form PCT/ISA /210 (second sheet) (July 2009)

| | INTERNATIONAL SEARCH REPORT | International application No. |
|---|---|---|
| | | PCT/CN2013/090726 |

**C (Continuation).** DOCUMENTS CONSIDERED TO BE RELEVANT

| Category* | Citation of document, with indication, where appropriate, of the relevant passages | Relevant to claim No. |
|---|---|---|
| A | CN 102412885 A (XIDIAN UNIVERSITY) 11 April 2012 (11.04.2012)<br><br>the whole document | 1-54 |
| A | US 2013051490 A1 (RESEARCH IN MOTION LTD) 28 February 2013 (28.02.2013)<br><br>the whole document | 1-54 |

Form PCT/ISA /210 (continuation of second sheet) (July 2009)

**INTERNATIONAL SEARCH REPORT**
Information on patent family members

| International application No. |
| --- |
| PCT/CN2013/090726 |

| Patent Documents referred in the Report | Publication Date | Patent Family | Publication Date |
| --- | --- | --- | --- |
| CN 102647751 A | 22 August 2012 | US 2013322288 A1 | 05 December 2013 |
| | | EP 2676380 A1 | 25 December 2013 |
| | | TW 201249131 A | 01 December 2012 |
| | | WO 2012110863 A1 | 23 August 2012 |
| | | KR 20130118934 A | 30 October 2013 |
| | | JP 2014506086 W | 06 March 2014 |
| CN 10196363 A | 09 February 2011 | WO 2012041107 A1 | 05 April 2012 |
| CN 102412885 A | 11 April 2012 | None | |
| US 2013051490 A1 | 28 February 2013 | EP 2562952 A1 | 27 February 2013 |
| | | CA 2787662 A1 | 24 February 2013 |
| | | US 8787480 B2 | 22 July 2014 |

Form PCT/ISA /210 (patent family annex) (July 2009)